Europäisches Patentamt

European Patent Office

Office européen des brevets

(11) Veröffentlichungsnummer: **0 234 032**
**B1**

# (12) EUROPÄISCHE PATENTSCHRIFT

(45) Veröffentlichungstag der Patentschrift:
14.06.89

(21) Anmeldenummer: 86117407.6

(22) Anmeldetag: 15.12.86

(51) Int. Cl.⁴: **B62D 25/20**, B65D 39/00

(54) Verschlussdeckel aus Kunststoff.

(30) Priorität: 03.01.86 DE 3600069

(43) Veröffentlichungstag der Anmeldung:
02.09.87 Patentblatt 87/36

(45) Bekanntmachung des Hinweises auf die Patenterteilung:
14.06.89 Patentblatt 89/24

(84) Benannte Vertragsstaaten:
FR GB NL SE

(56) Entgegenhaltungen:
DE-C- 3 427 626

(73) Patentinhaber: TRW United-Carr GmbH, Am
Pulverhäuschen 7, D-6753 Enkenbach-Alsenborn 1(DE)

(72) Erfinder: Kraus, Willibald, Haydnstrasse 44,
D-6718 Grünstadt(DE)
Erfinder: Weinheimer, Ute, Gartenstrasse 1,
D-6719 Ramsen(DE)

(74) Vertreter: Schieschke, Klaus, Dipl.-Ing. et al,
Patentanwälte Dipl.-Ing. E. Eder Dipl.-Ing. K. Schleschke
Elisabethstrasse 34, D-8000 München 40(DE)

**Beschreibung**

Die Erfindung bezieht sich auf einen Verschlußdeckel aus Kunststoff, insbesondere zum Verschließen einer Öffnung im Wand- oder Bodenbereich eines Kraftfahrzeuges, mit einer Abdeckplatte und daran angeordneten, die Öffnung hintergreifenden Halteelementen, wobei mehrere Halteelemente entsprechend dem Umfang der Öffnung nebeneinander angeordnet sind und jedes Halteelement einen den Wand- oder Bodenbereich beaufschlagenden Haltenocken aufweist.

Als Stand der Technik, von dem die Erfindung ausgeht, ist bereits ein Verschlußdeckel bekannt, bei welchem die Halteelemente als Führungselemente ausgebildet sind (DE-PS 3 427 626). Diese Führungssegmente des Deckelteils bewirken keine Kraftübertragung sondern dienen lediglich zur Vormontage des Verschlußdeckels an dem Träger. Allein durch ein Schmelzteil, welches das Deckelteil mit dem Träger verbindet, wird der Verschlußdeckel an dem Träger befestigt. Bei dieser bekannten Konstruktion ergibt sich damit ein Zusammenwirken von Schmelzteil und Führungssegmenten, wobei außerdem diese gesamte Konstruktion nur für eine bestimmte Dicke von Trägern geeignet ist.

Als Stand der Technik ist weiter ein Verschlußdeckel bekannt, welcher vier einander gegenüberliegende Halteelemente aufweist, die federnd ausgebildet sind und damit eine zu verschließende Öffnung hintergreifen können (GB-PS 734 857). Die Haltewirkung dieser Halteelemente ist relativ gering und nur auf eine bestimmte Dicke des Wand- oder Bodenbereichs eines Kraftfahrzeuges eingestellt. Sobald sich hier eine Änderung ergibt oder eine größere Toleranz auftritt, kann dieser bekannte Haltedeckel nicht verwendet werden, so daß seitens des Herstellers stets eine größere Anzahl von verschiedenen Ausführungen von Verschlußdeckeln bereitgehalten werden müssen, um allen in der Kraftfahrzeugindustrie auftretenden Forderungen zu entsprechen.

Zum Stand der Technik zählt weiterhin ein Verschlußdeckel für Abtropflöcher in Bodenblechen von Kraftfahrzeugen (DE-GM 1 840 793). Dieser Verschlußdeckel besteht aus einer Scheibe mit einer äußeren U-förmigen Ringnut, deren beiden Schenkel freitragend ausgebildet sind und annähernd parallel liegen. Der äußere Schenkel weist etwa in halber Höhe eine ringförmig umlaufende Eingriffsnase sowie an seinem oberen Ende einen Ringflansch auf. Durch das Zusammenwirken von Ringflansch und Nase ergibt sich ein Hintergreifen dieses ringförmigen Halteelements im Wand- bzw. Bodenbereich einer Öffnung in einem Kraftfahrzeug. Wiederum ist dieses Halteelement nur geeignet, den Verschlußdeckel bei einer bestimmten Stärke sicher am Wand- oder Bodenbereich eines Kraftfahrzeuges zu haltern; sobald Toleranzen auftreten oder in einem größeren Bereich unterschiedliche Dicken berücksichtigt werden müssen, ist der Einsatzbereich dieses bekannten Verschlußdeckels ausgeschlossen.

Demgegenüber besteht die Aufgabe der vorliegenden Erfindung darin, einen Verschlußdeckel der eingangs genannten Art so auszubilden, daß auch bei Vorliegen sehr starker Toleranzen eine Öffnung im Wand- oder Bodenbereich eines Kraftfahrzeuges einwandfrei verschlossen werden kann.

Diese Aufgabe wird erfindungsgemäß dadurch gelöst, daß zumindest jeweils über einen Teil des Umfangs der Öffnung jeder Haltenocken gegenüber dem vorhergehenden Haltenocken höhenmäßig versetzt ist. Durch das Zusammenwirken der nebeneinander angeordneten Halteelemente, welche jeweils mit höhenmäßig gegeneinander versetzten Haltenocken versehen sind, ergibt sich erfindungsgemäß der Vorteil, daß auch sehr starke Toleranzen in Wandstärken oder bei Kragenlöchern im Wand- oder Bodenbereich eines Kraftfahrzeuges überwunden werden können. Durch den sich periodisch wiederholenden höhenmäßigen Versatz der Haltenocken ergibt sich auf einfache Weise eine Haltewirkung des Verschlußdeckels auch bei sehr unterschiedlichen Wandstärken, so daß hieraus wiederum eine Vereinfachung in der Lagerhaltung resultiert.

Der höhenmäßige Versatz der Haltenocken kann jeweils in Form einer kontinuierlichen Kurve verlaufen, wobei die kontinuierlichen Kurven jeweils gleichverlaufend ausgebildet sein können. Damit ergibt sich etwa eine Art Gewindesteigung, wobei über den Umfang einer Öffnung verteilt mehrere derartige Gewindesteigungen vorhanden sein können.

In weiterer Ausgestaltung der Erfindung kann sich der höhenmäßige Versatz jeweils zumindest über ein Drittel des Umfangs der Öffnung erstrecken, so daß jeweils zumindest drei Haltenocken im Eingriff sind und den erfindungsgemäßen Verschlußdeckel sicher in einer Öffnung haltern.

Nach einem anderen Merkmal der Erfindung kann der höhenmäßige Versatz der Haltenocken durch die gleichverlaufenden, kontinuierlichen Kurven gleicher Steigung gebildet sein. Hierbei kann jedes Halteelement aus einem achsparallel verlaufenden, federnden Steg bestehen, welcher außenseitig den Haltenocken aufweist, wobei die einzelnen Stege in einem Abstand voneinander an der Abdeckplatte angeordnet sind, welcher kleiner als die Breite eines Steges ist. Jeweils nach einem Drittel des Umfangs der Öffnung grenzt an ein Halteelement mit am höchsten angeordneten Haltenocken ein Halteelement mit am niedrigsten angeordneten Haltenocken an, so daß sich die vorgenannte, etwa als Gewindesteigung bezeichnete, kurvenförmig verlaufende Form der Anordnung der Haltenocken ergibt.

Jedes der Halteelemente ist an der Unterseite der Abdeckplatte angeordnet, wobei die Abdeckplatte in dem von den Halteelementen umgrenzten Raum eine Verstärkung aufweisen kann. Diese Verstärkung kann als umlaufender Bund ausgebildet sein, wobei der umlaufende Bund eine Höhe aufweist, die kleiner oder gleich der Höhe der die Halteelemente bildenden Stege ist. Erfindungsgemäß können die Stege dem umlaufenden Bund gegenüberliegende Abstützbereiche aufweisen. Weiterhin kann der die Halteelemente überragende Rand der Abdeckplatte federnd ausgebildet oder mit einem anderen Kunststoff abgeschlossen sein. Jeder Steg kann darüber hinaus innenseitig an dem Befestigungsbereich zur Abdeckplatte mit einer Verstärkungsrippe ausgestattet werden.

Die Erfindung wird nachfolgend anhand von in der Zeichnung dargestellten Ausführungsbeispielen näher beschrieben. In der Zeichnung zeigen:

Fig. 1 eine Seitenansicht eines Verschlußdeckels, im Mittelschnitt;

Fig. 2 eine Draufsicht auf den Verschlußdeckel nach Fig. 1, teils geschnitten;

Fig. 3 bis 6 verschiedene Ausführungsformen des erfindungsgemäßen Verschlußdeckels, im Schnitt;

Fig. 7 und 8 eine Öffnung im Wand- oder Bodenbereich eines Kraftfahrzeuges in perspektivischer und in Schnittansicht;

Fig. 9 und 10 eine perspektivische und Schnittdarstellung einer Kragenöffnung im Wand- oder Bodenbereich eines Kraftfahrzeuges.

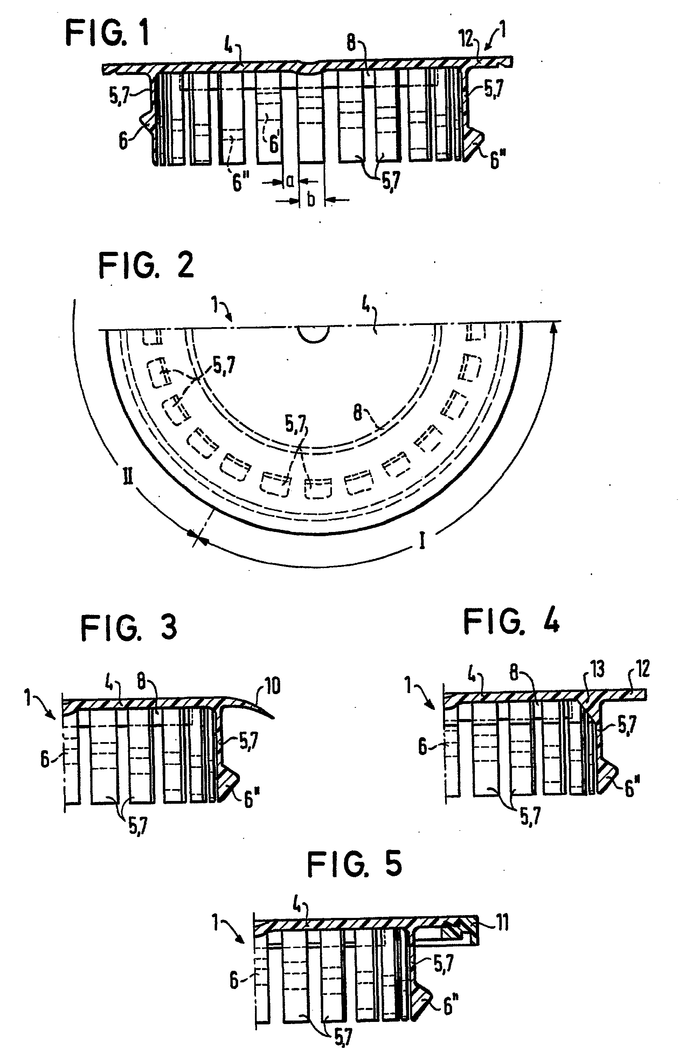

In Fig. 1 ist ein Verschlußdeckel 1 aus Kunststoff im Schnitt dargestellt. Wie ersichtlich, besteht dieser Verschlußdeckel 1 aus einer Abdeckplatte 4 und daran angeordneten Halteelementen 5. Jedes Halteelement 5 ist als achsparallel verlaufender federnder Steg 7 beschaffen, welcher jeweils einen beispielsweise dreieckförmigen Haltenocken 6 aufweist. Der Verschlußdeckel weist eine Anzahl derartiger Halteelemente 5 auf, welche nebeneinander angeordnet sind. Die einzelnen Stege 7, d.h. die Halteelemente 5, sind hierbei in einem Abstand a voneinander angeordnet, welcher kleiner als die Breite b eines Steges 7 sein kann.

Jeweils über einen Teil des Umfangs einer zu verschließenden Öffnung ist der Haltenocken 6 an dem entsprechenden Halteelement gegenüber dem vorhergehenden Haltenocken höhenmäßig versetzt, wie Fig. 1 zu entnehmen ist. Nach Fig. 1 steigt auf der rechten Seite von dem niedrigsten Haltenocken 6" der nächstfolgende Haltenocken an, wobei der darauffolgende Haltenocken wiederum einen Ansteig aufweist, bis schließlich der höchste Haltenocken 6' erreicht ist. Dieser Anstieg kann in Form einer kontinuierlichen Kurve ausgebildet sein.

Nach Fig. 1 und 2 besteht die Möglichkeit, daß sich der höhenmäßige Versatz jeweils zumindest über ein Drittel I bzw. II, d.h. bei einer runden Öffnung um 120° des Umfanges einer zu verschließenden Öffnung erstreckt. Hierbei sind jeweils über 120° kontinuierliche Kurven bezüglich des höhenmäßigen Versatzes vorgesehen, wobei jede der kontinuierlichen Kurve gleiche Steigung aufweist: Von 0 bis 120° steigen die Haltenocken vom Punkt 6" bis zu 6'; dann ist die Kurve unterbrochen und es schließt wieder ein tief angeordneter Haltenocken 6" gemäß Fig. 1 an, welcher wiederum ansteigt über 120°, bis der letzte Haltenocken dieser Steigung über der Höhe des Haltenockens von 6' entspricht. Somit sind jeweils über 120° verteilt drei kontinuierliche Kurven vorgesehen, welche durch die an den einzelnen Halteelementen 5 angeordneten Haltenocken 6 gebildet sind. Hierbei erstreckt sich der Bereich von dem untersten Haltenocken 6" bis zum obersten Haltenocken 6'.

Statt der 120°-Teilung ist es auch möglich, eine Vierteilung, d.h. 90°, oder eine Fünfteilung, oder größere Teilungen mit kontinuierlichen Kurven, die durch ansteigende Haltenocken 6 gebildet sind, vorzusehen. Es besteht auch die Möglichkeit, die Abstände a zwischen den einzelnen Stegen 7 abzuändern und der Breite b der einzelnen Stege anzunähern.

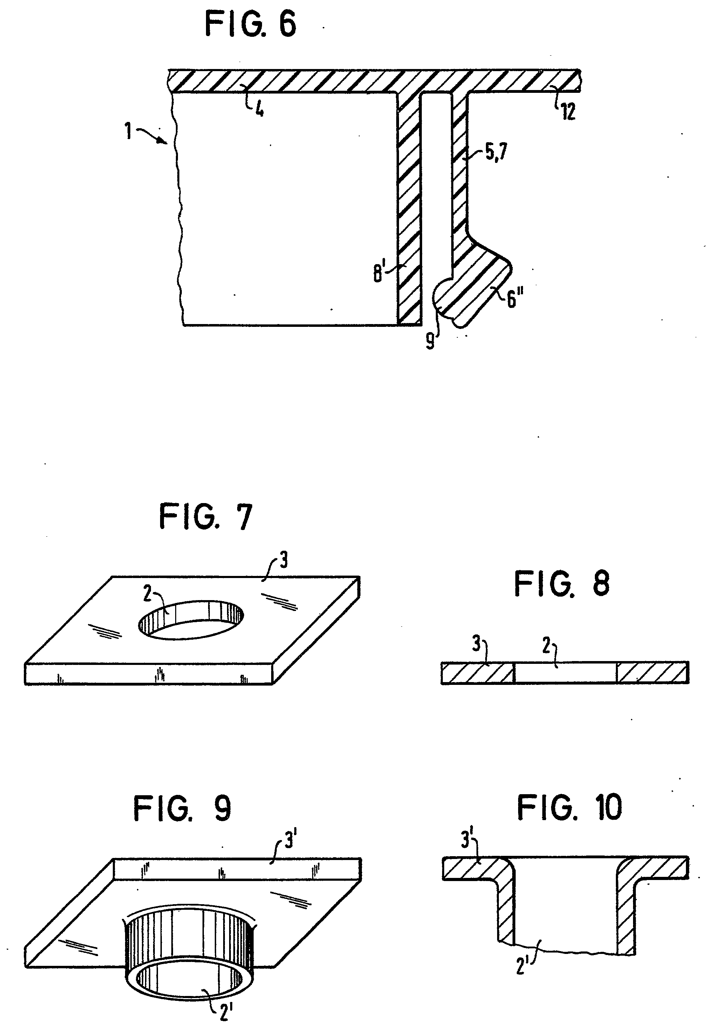

Wie in Fig. 1 und 2 ersichtlich, erstreckt sich jedes Halteelement 5, d.h. der jeweils federnde Steg 7, von der Unterseite der Abdeckplatte 4 achsparallel. Hierbei ist ein Rand 12 vorgesehen, welcher eine zu verschließende Öffnung überdeckt. Eine derartige Öffnung ist in Fig. 7 und 8 dargestellt. Hier ist ein Wand- oder Bodenbereich 3 vorhanden, in welchen eine Öffnung 2 eingearbeitet ist. Die Dicke des Wand- oder Bodenbereiches kann nun in großen Toleranzen variieren, da beim Einsetzen des erfindungsgemäßen Verschlußdeckels 1 bei einer Dreiteilung bezüglich 120° der kurvenförmig verlaufenden Haltenocken zumindest stets drei Haltenocken hinter die Öffnung 2 greifen und den Verschlußdeckel sicher haltern; zumindest ein Halteelement 5 mit dem entsprechend angeordneten Haltenocken 7 jeder Sektion I bzw. II und den weiteren Sektionen ist in der Lage, entsprechend der Dicke des Wand- oder Bodenbereichs 3 für den richtigen Eingriff zu sorgen.

Erfindungsgemäß ist es auch möglich, in Fig. 9 und 10 näher dargestellte Kragenlöcher mit dem Haltedeckel zu verschliessen. Da bei der Fertigung derartiger Kragenlöcher 2' in einem Wand- oder Bodenbereich 3' sehr große Toleranzen in der Kragenhöhe auftreten können, z.B. bis zu 5 mm, wie schematisch in Fig. 10 dargestellt, ist der erfindungsgemäße Verschlußdeckel in der Lage, durch den kurvenförmig angeordneten Verlauf der Haltenocken 6 alle Toleranzen auszugleichen; im allerungünstigsten Fall sind jeweils ein Haltenocken einer Sektion I usw. im Eingriff und hintergreifen das Kragenloch 2' im Wand- oder Bodenbereich 3' eines Kraftfahrzeuges und bewirken einen sicheren Abschluß.

Dieser sichere Abschluß ist auch dann gewährleistet, wenn z.B. der Unterbodenbereich mit Kunststoff beschichtet und dieser mit hohem Druck aufgetragen wird: die federnden Stege 7 und die Haltenocken 6 führen zu einem sicheren Halt des Verschlußdeckels in der Öffnung 2 bzw. 2' mit deren einwandfreiem Abschluß.

Die Abdeckplatte 4 kann in dem von den Halteelementen 5 umgrenzten Raum eine Verstärkung aufweisen, welche nach Fig.1 und 2 in Form eines umlaufenden Bundes 8 ausgebildet ist. Die Höhe des umlaufenden Bundes kann hierbei bei den Ausführungsformen nach Fig. 1 bis 5 kleiner sein als die Höhe der Halteelemente 5.

In Fig. 3 ist eine Ausführungsform dargestellt, bei welcher der äußere Rand 10 der Abdeckplatte 4 des Verschlußdeckels 1 in Form einer federnden Lippe ausgebildet sind. Ansonsten ist die Ausführungsform nach Fig. 3 identisch mit der Ausführungsform nach Fig. 1und 2, d.g. den kurvenförmig ansteigenden Haltenocken 6 und den federnden Stegen 7.

Bei der Ausführungsform nach Fig. 4 weisen die federnden Stege 7, d.h. die Halteelemente 5, innenseitig an dem Befestigungsbereich zur Abdeckplatte 4 eine Verstärkungsrippe 13 auf, wodurch sich eine stabilere Bauweise ergibt. Ansonsten bestehen volle Übereinstimmungen zu der Konstruktion nach Fig.1 und 2, d.h. den kurvenförmig ansteigenden Haltenocken und den federnden Stegen 7.

Bei der Bauform nach Fig. 5 ist der Rand der Abdeckplatte 4 so gestaltet, daß ein anderer Kunststoff 11 vorgesehen ist, welcher gegenüber dem Kunststoff, aus dem der erfindungsgemäße Verschlußdeckel 1 besteht, geringere Schmelzwerte aufweist. Dadurch ist die Möglichkeit gegeben, den erfindungsgemäßen Verschlußdeckel nach Einsetzen in eine Öffnung 2 bzw. 2' durch Hitzeeinwirkung über den Kunststoff 11 formschlüssig mit dem Wand- oder Bodenbereich 3 bzw. 3' nach Fig. 7 bis 10 zu verbinden.

In Fig. 6 ist eine Bauform dargestellt, bei welcher der umlaufende Bund 8' eine Höhe aufweist, die gleicher Höhe der die Halteelemente 5 bildenden federnden Stege 7 ist. Hier besteht zusätzlich die Möglichkeit, die Stege mit Abstützbereichen 9 zu versehen, welche dem umlaufenden Bund 8' gegenüberliegen. Es besteht auch die nicht näher dargestellte Möglichkeit, den umlaufenden Bund 8' mit einer Abstützung zu versehen, welcher der Innenseite des federnden Steges jeweils gegenüberliegt.

Allen Ausführungsformen von Fig. 1 bis Fig. 6 ist gemeinsam, daß als federnde Stege ausgebildete Halteelemente 5 dicht nebeneinander angeordnet sind; jedes der Halteelemente 5 weist einen Haltenocken 6 auf, wobei der Haltenocken des einen Steges höhenmäßig gegenüber dem Haltenocken des vorhergehenden und des nachfolgenden Steges versetzt ist. Der höhenmäßige Versatz ist hierbei so, daß sich eine kontinuierlich ansteigende Kurve ergibt, welche sich über einen Teil des Umfangs der zu verschließenden Öffnung 2 bzw. 2' nach Fig. 7 bis 10 erstreckt. Denkbar sind Teilungen bei kreisförmigen Öffnungen um 120°, um 90° und um kleinere Abschnitte, wobei stets kontinuierliche Kurven durch die Haltenocken 6 gebildet werden.

Durch diese kontinuierlichen Kurvenabschnitte des erfindungsgemäßen Verschlußdeckels 1 ist es möglich, auch sehr große Toleranzen bei Kragenlöchern gemäß Fig. 9 und 10 auszugleichen und die entsprechende Öffnung 2' sicher durch den Verschlußdeckel abzuschließen. Auch glatte Wand- und Bodenbleche 3 unterschiedlichster Toleranzen nach Fig. 7 und 8 können durch den erfindungsgemäßen Verschlußdeckel bezüglich ihrer Öffnung 2 sicher abgeschlossen werden.

**Patentansprüche**

1. Verschlußdeckel aus Kunststoff, insbesondere zum Verschließen einer Öffnung im Wand- oder Bodenbereich eines Kraftfahrzeuges, mit einer Abdeckplatte und daran angeordneten, die Öffnung hintergreifenden Halteelementen, wobei mehrere Halteelemente entsprechend dem Umfang der Öffnung nebeneinander angeordnet sind und jedes Halteelement einen den Wand- oder Bodenbereich beaufschlagenden Haltenocken aufweist, dadurch gekennzeichnet, daß jeweils zumindest über einen Teil des Umfangs der Öffnung (2, 2') zu jeder Haltenocke (6) gegenüber dem vorhergehenden Haltenocken höhenmäßig versetzt ist.

2. Verschlußdeckel nach Anspruch 1, dadurch gekennzeichnet, daß der höhenmäßige Versatz der Haltenocken (6) jeweils in Form einer kontinuierlichen Kurve verläuft.

3. Verschlußdeckel nach Anspruch 1 und 2, dadurch gekennzeichnet, daß die kontinuierlichen Kurven gleichverlaufend ausgebildet sind.

4. Verschlußdeckel nach Anspruch 3, dadurch gekennzeichnet, daß die kontinuierlichen Kurven jeweils gleiche Steigung aufweisen.

5. Verschlußdeckel nach Anspruch 1, dadurch gekennzeichnet, daß sich der höhenmäßige Versatz jeweils zumindest über ein Drittel (I, II) des Umfangs der Öffnung (2, 2') erstreckt.

6. Verschlußdeckel nach Anspruch 1 bis 5, dadurch gekennzeichnet, daß der höhenmäßige Versatz der Haltenocken (6, 6', 6") durch die gleich verlaufenden kontinuierlichen Kurven gleicher Steigung gebildet ist.

7. Verschlußdeckel nach einem der vorhergehenden Ansprüche, dadurch gekennzeichnet, daß jedes Halteelement (5) aus einem achsparallel verlaufenden, federnden Steg (7) besteht, welcher außenseitig den Haltenocken (6, 6', 6") aufweist, wobei die einzelnen Stege (7) in einem Abstand (a) voneinander an der Abdeckplatte (4) angeordnet sind, welcher kleiner als die Breite (d) eines Steges (7) ist.

8. Verschlußdeckel nach Anspruch 5 bis 7, dadurch gekennzeichnet, daß jeweils nach einem Drittel des Umfangs der Öffnung (2, 2') an ein Halteelement (5) mit am höchsten angeordneten Haltenocken (6') ein Halteelement (5) mit am niedrigsten angeordneten Haltenocken (6") angrenzt.

9. Verschlußdeckel nach einem der vorhergehenden Ansprüche, dadurch gekennzeichnet, daß die Halteelemente (5) an der Unterseite der Abdeckplatte (4) angeordnet sind.

10. Verschlußdeckel nach Anspruch 9, dadurch gekennzeichnet, daß die Abdeckplatte (4) in dem von den Halteelementen (5) umgrenzten Raum eine Verstärkung (8) aufweist.

11. Verschlußdeckel nach Anspruch 10, dadurch gekennzeichnet, daß die Verstärkung (8) als umlaufender Bund ausgebildet ist.

12. Verschlußdeckel nach Anspruch 11, dadurch gekennzeichnet, daß der umlaufende Bund (8') eine Höhe aufweist, welche kleiner oder gleich der Höhe der die Halteelemente (5) bildenden Stege (7) ist.

13. Verschlußdeckel nach Anspruch 12, dadurch gekennzeichnet, daß die Stege (7) dem umlaufenden Bund (8') gegenüberliegende Abstützbereiche (9) aufweisen.

14. Verschlußdeckel nach einem der vorhergehenden Ansprüche, dadurch gekennzeichnet, daß der die Halteelemente (5) überragende Rand (10) der Abdeckplatte (4) federnd ausgebildet oder mit einem anderen Kunststoff (11) abgeschlossen ist.

15. Verschlußdeckel nach einem der vorhergehenden Ansprüche, dadurch gekennzeichnet, daß jeder Steg (7) innenseitig an den Befestigungsbereich zur Abdeckplatte (4) mit einer Verstärkungsrippe (13) versehen ist.

**Claims**

1. Closure cover of plastic, in particular for the closing of an opening in the wall or floor region of a motor vehicle, with a cover plate and retaining elements, arranged on the latter and engaging behind the opening, a plurality of retaining elements according to the circumference of the opening being arranged next to one another and each retaining element having a retaining lug acting upon the wall or floor region, characterized in that, at least over a part of the circumference of the opening (2, 2'), each retaining lug (6) is offset in height with respect to the preceding retaining lug.

2. Closure cover according to Claim 1, characterized in that the offset in height of the retaining lugs (6) in each case runs in the form of a continuous curve.

3. Closure cover according to Claims 1 and 2, characterized in that the continuous curves are designed as running identically.

4. Closure cover according to Claim 3, characterized in that the continuous curves in each case have the same slope.

5. Closure cover according to Claim 1, characterized in that the offset in height in each case extends at least over one third (I, II) of the circumference of the opening (2, 2').

6. Closure cover according to Claims 1 to 5, characterized in that the offset in height of the retaining lugs (6, 6', 6") is formed by the identically running continuous curves of the same slope.

7. Closure cover according to one of the preceding claims, characterized in that each retaining element (5) consists of an axially parallel running, resilient web (7), which has on the outside the retaining lug (6, 6', 6"), the individual webs (7) being arranged on the cover plate (4) at a distance (a) from one another which is smaller than the width (d) of a web (7).

8. Closure cover according to Claims 5 to 7, characterized in that, after one third of the circumference of the opening (2, 2'), a retaining element (5) with the highest arranged retaining lug (6') has in each case adjacent to it a retaining element (5) with the lowest arranged retaining lug (6").

9. Closure cover according to one of the preceding claims, characterized in that the retaining elements (5) are arranged on the underside of the cover plate (4).

10. Closure cover according to Claim 9, characterized in that the closure plate (4) has a reinforcement (8) in the space bounded by the retaining elements (5).

11. Closure cover according to Claim 10, characterized in that the reinforcement (8) is designed as a peripheral collar.

12. Closure cover according to Claim 11, characterized in that the peripheral collar (8') has a height which is less than or equal to the height of the webs (7) forming the retaining elements (5).

13. Closure cover according to Claim 12, characterized in that the webs (7) have supporting regions (9) facing the peripheral collar (8').

14. Closure cover according to one of the preceding claims, characterized in that the rim (10) of the cover plate (4), projecting beyond the retaining elements (5), is designed as resilient or is terminated with another plastic (11).

15. Closure cover according to one of the preceding claims, chracterized in that each web (7) is provided on the inside at the fastening region to the cover plate (4) with a reinforcing rib (13).

**Revendications**

1. Couvercle d'obturation en matière plastique, notamment pour l'obturation d'une ouverture dans une partie de paroi ou de fond d'un véhicule à moteur, comportant une plaque de recouvrement et des éléments de retenue disposés sur celle-ci et agrippant l'ouverture par dessous, plusieurs éléments de retenue en fonction du périmètre de l'ouverture étant juxtaposés et chaque élément de retenue comportant une saille de retenue s'appuyant sur la partie de paroi ou la partie de fond, caractérisé en ce que respectivement au moins sur une partie du périmètre de l'ouverture (2, 2') chaque saillie de retenue (6) est décalée en hauteur par rapport à la saillie de retenue précédente.

2. Couvercle d'obturation selon la revendication 1, caractérisé en ce que le décalage en hauteur des cames de retenue (6) s'effectue respectivement sous forme d'une courbe continue.

3. Couvercle d'obturation selon la revendication 1 ou 2, caractérisé en ce que les courbes continues sont de configuration uniforme.

4. Couvercle d'obturation selon la revendication 3, caractérisé en ce que les courbes continues présentent respectivement la même pente ascendante.

5. Couvercle d'obturation selon la revendication 1, caractérisé en ce que le décalage en hauteur s'étend respectivement au moins sur un tiers (I, II) du périmètre de l'ouverture (2, 2').

6. Couvercle d'obturation selon les revendications 1 à 5, caractérisé en ce que le décalage en hauteur des saillies de retenue (6, 6', 6") est formé par les courbes continues d'allure uniforme et de même pente ascendante.

7. Couvercle d'obturation selon l'une des revendications précédentes, caractérisé en ce que chaque élément de retenue (5) consiste en une ailette élastique (7), s'étend parallèlement à l'axe, qui comporte la saillie de retenue sur le côté extérieur (6, 6', 6"), les différentes ailettes (7) étant disposées à intervalle (a) les unes des autres sur la plaque de recouvrement (4), lequel intervalle est inférieur à la largeur (d) d'une aillette (7).

8. Couvercle d'obturation selon les revendications 5 à 7, caractérisé en ce qu'au-delà d'un tiers du périmètre de l'ouverture (2, 2') un élément de retenue (5) muni d'une saillie de retenue (6") située au plus bas avoisine un élément de retenue (5) muni d'une saillie de retenue (6') située au plus haut.

9. Couvercle d'obturation selon l'une des revendications précédentes, caractérisé en ce que les éléments de retenue (5) sont agencés sur le côté envers de la plaque de recouvrement (4).

10. Couvercle d'obturation selon la revendication 9, caractérisé en ce que la plaque de recouvrement (4) présente un renforcement (8) dans l'espace entouré par les éléments de retenue (5).

11. Couvercle d'obturation selon la revendication 10, caractérisé en ce que le renforcement (8) est conçu sous forme de collet de révolution.

12. Couvercle d'obturation selon la revendication 11, caractérisé en ce que le collet de révolution (8') présente une hauteur qui est inférieure ou égale à la hauteur des ailettes (7) formant les éléments de retenue (5).

13. Couvercle d'obturation selon la revendication 12, caractérisé en ce que les ailettes (7) présentent des zones d'appui (9) faisant face au collet de révolution (8').

14. Couvercle d'obturation selon l'une des revendications précédentes, caractérisé en ce que le bord (10) de la plaque de recouvrement (4) saillant au-delà des éléments de retenue (5), est conçu de façon élastique ou complété par une autre matière plastique (11).

15. Couvercle d'obturation selon l'une des revendications précédentes, caractérisé en ce que chaque ailette (7) est munie sur le côté intérieur, dans la zone de fixation sur la plaque de recouvrement (4), d'une nervure de renforcement (13).

FIG. 1

FIG. 2

FIG. 3

FIG. 4

FIG. 5

## FIG. 6

## FIG. 7

## FIG. 8

## FIG. 9

## FIG. 10